# EUROPÄISCHE PATENTSCHRIFT

(11) **EP 0 716 886 B1**
(45) Veröffentlichungstag und Bekanntmachung des Hinweises auf die Patenterteilung: **14.07.1999**
(21) Anmeldenummer: 95119193.1
(22) Anmeldetag: 06.12.1995
(51) Int. Cl.: B01J 35/04, B01J 37/00, B01J 21/00

(54) **Verfahren zur Herstellung im wesentlichen SiO2-freier Wabenkörper**
Process for producing a honeycomb structure substancially free of SiO2
Procédé de préparation d'une structure en nid d'abeille pratiquement exempte de SiO2

(30) Priorität: 15.12.1994 DE 4444707
(43) Veröffentlichungstag der Anmeldung: 19.06.1996
(73) Patentinhaber: BASF AKTIENGESELLSCHAFT, 67056 Ludwigshafen (DE)
(72) Erfinder: Irgang, Matthias, Dr., D-69121 Heidelberg (DE); Roos, Hans, Dr., D-67098 Bad Dürkheim (DE); Miesen, Ernest, D-67069 Ludwigshafen (DE)

(56) Entgegenhaltungen:
- EP-A- 0 237 240
- US-A- 4 280 926
- US-A- 4 518 704

## Beschreibung

Die vorliegende Erfindung betrifft Wabenkörper, zu deren Herstellung ein im wesentlichen SiO₂-freies Gemisch von alpha-Aluminiumoxid, gamma-Aluminiumoxid und Kohlefasern unter Zusatz organischer Gleit- und Bindemittel eingesetzt wird, und deren Verwendung als Katalysatoren oder Katalysatorträger.

Seit vielen Jahren sind Wabenkörper bekannt, die für die Autoabgas-Reinigung und die Stickoxid-Entfernung aus Kraftwerksabgasen eingesetzt werden. Auch für andere chemische Verfahren wurden bereits Wabenkatalysatoren eingesetzt. Darüber gibt Catal. Rev. Sci. Eng., 30(3), 341 bis 392 (1988) einen Überblick.

Für die Autoabgaskatalysatoren werden Waben aus Cordierit, einem sehr gut verformbaren Mg-Al-Silikat verwendet. Nach dem Brennen besitzt das Material keine Porosität, sodaß sich eine aufwendige Beschichtung der Wabenoberfläche mit Aluminiumoxid und eine Imprägnierung mit den Aktivkomponenten anschließen muß.

Die Fertigung von Al₂O₃-Wabenkörpern wird in DE-A-29 30 000 ausgehend von Böhmit (Alpha-AlOOH) und Gamma-Al₂O₃ beschrieben. Als Zusätze werden Keramik-Fasern und zur Peptisation Salzsäure verwendet.

Ähnlich wird auch in EP-A-197 645 verfahren, wo verschiedene Aluminiumoxid-Hydrate mit Aluminiumchlorohydraten und/oder Ton zu Strängen oder zu Wabenkörpern verarbeitet werden.

Wabenkörper nach der DE-A-29 30 000 oder der EP-A-197 645 herzustellen, scheiteren an der starken Schrumpfung der ausgeformten Masse, da bei der Trocknung starke Rißbildung und sogar Zerfall der Wabenkörper eintritt.

Weiterhin sind aus "Alumina Products" (Broschüre d. Fa. Sumitomo Aluminium Smelting Co., Ltd., ca. 1985) Al₂O₃-Wabenkörper mit BET-Oberflächen von 20 bzw. 130 m²/g bekannt. Diese haben jedoch einen Al₂O₃-Gehalt von nur 80 Gew.-%.

Der vorliegenden Erfindung lag daher die Aufgabe zugrunde, den zuvor genannten Nachteilen abzuhelfen, insbesondere Al₂O₃-Wabenkörper mit ausreichender Porosität zu fertigen, um die aufwendige Beschichtung, wie sie bei Cordieritwaben notwendig ist, zu vermeiden.

Demgemäß wurden neue und verbesserte Wabenkörper gefunden, welche dadurch gekennzeichnet sind, daß man zu deren Herstellung ein im wesentlichen SiO₂-freies Gemisch von alpha-Aluminiumoxid, gamma-Aluminiumoxid und Kohlefasern unter Zusatz organischer Gleit- und Bindemittel einsetzt sowie deren Einsatz als Katalysatoren oder als Katalysatorträger für Steamreforming-Verfahren, katalytische Nachverbrennung, Hydrierungen und Dehydrierungen.

Die erfindungsgemäßen Wabenkörper kann man wie folgt herstellen:

Man mischt fein gemahlenes (Korngröße: 5 bis 40 µm), bevorzugt feinst gemahlenes alpha-Al₂O₃ (Korngröße: 5 bis 8 µm) und fein gemahlenes (Korngröße: 5 bis 40 µm), bevorzugt feinst gemahlenes gamma-Al₂O₃ mit Kohlefasern unter Zusatz organischer Gleit- und Bindemittel.

Für den Einsatz als Katalysatorträger stören alle Verunreinigungen, die als Katalysatorgifte wirken können, z.B. Chlorid und Sulfid, und bei Verfahren, die bei erhöhter Temperatur und hohem Wasserdampfpartialdruck arbeiten, auch alle SiO₂-Bestandteile, da SiO₂ mit Wasserdampf flüchtig ist und nachfolgende Apparateteile verstopfen oder belegen kann.

Die eingesetzten Rohstoffe sollen in der Regel eine hohe Reinheit haben. Der fertige Katalysator soll weniger als 0,1 Gew.-%, also 0 bis 0,09 Gew.-%, bevorzugt 0 bis 0,01 Gew.-% SiO₂ und weniger als 0,1 %, also 0 bis 0,09 Gew.-%, bevorzugt 0 bis 0,01 Gew.-% Sulfat enthalten und im wesentlichen Chlor-frei sein, also 0 bis 0,01 Gew.-% Chlor enthalten.

Als organische Gleit- und Bindemittel eignen sich Methylcellulose, Polysaccharide und Fettsäurepolyglycolester, bevorzugt Alginate und Polyvinylalkohol, besonders bevorzugt Polyethylenoxid und Carboxymethylcellulose.

Die Knetung unter Zusatz von vollentsalztem Wasser kann z.B. in einem Sigma-Kneter, einem Kollergang-Mischer oder einem Wirbel-Mischer erfolgen. Nach Einstellung der richtigen Plastizität durchläuft die Masse eine Ruhephase, die der Homogenisierung dient. Anschließend wird sie durch eine Hubelpresse mit Siebplatte gepreßt, um körnige Bestandteile, lange Fasern oder andere Verunreinigungen zurückzuhalten.

Die dabei erhaltenen Hubel stehen für die Verpressung zu Monolithen zur Verfügung.

Als Wabenkörper-Pressen können Schneckenextruder oder Kolbenpressen, die mit geeigneten Düsenplatten ausgestattet sind, eingesetzt werden. Die durch die Düsenplatte gegebenen Durchmesser der Kanalöffnungen liegen bevorzugt im Bereich von 3 mm bis 15 mm und die Wandstärken in der Regel zwischen 0.5 mm und 3 mm.

Dabei können die Kanäle unterschiedliche Form haben, bevorzugte Ausführungen haben rechteckige, dreieckige oder runde Kanäle.

Um rißfreie Monolithe zu erhalten, muß eine außerordentlich langsame und gleichmäßige Trocknung erreicht werden. Erst durch Umhüllung der ausgeformten Teile mit einer Polyethylen-Folie gelingt es, eine so langsame Trocknung bei Raumtemperatur zu erreichen, daß eine gleichmäßige Schrumpfung eintritt und Rißbildung vermieden wird.

Nach einer Gewichtsabnahme von ca.14 % wird die Polyethylenfolie entfernt, dann erfolgt bei langsam steigender Temperatur die Trocknung der weiterhin in einem Karton befindlichen Wabenkörper in einem Trockenschrank.

Durch Calcinieren bei Temperaturen von 350 bis 650°C, bevorzugt 450 bis 600°C, besonders bevorzugt 500 bis 550°C erhält man Wabenkörper aus einem Gemisch von alpha- und gamma-Al₂O₃ mit einer BET-Oberfläche von 2 bis 120 m²/g, bevorzugt von 90 bis 120 m²/g.

Durch das Brennen in einem Glühofen bei Temperaturen von 900 bis 1400°C, bevorzugt 1000 bis 1300°C, besonders bevorzugt 1100 bis 1250°C wandelt sich das noch vorhandene gamma-Al₂O₃ in alpha-Al₂O₃ um. Gleichzeitig werden die Kohlefasern verbrannt, sodaß die Makroporosität des Wabenkörpers erhöht wird.

Die Weiterverarbeitung durch Imprägnierung wird in der Regel in einem Tränkkasten mit Siebeinsatz, der mit einer Metallsalz-Lösung gefüllt ist, durchgeführt. Bevorzugte Metallsalze sind Nitrate und Salze organischer Säuren wie Acetate oder Formiate, da diese bei der Temperung vollständig in die Metalloxide übergehen. Je nach gewünschter Metallkonzentration sind mehrere Tränkschritte erforderlich.

Nach jeder Tränkung wird der Katalysator getrocknet und calciniert.

Die Verwendung dieser Wabenkatalysatoren setzt einen für den Einbau von Wabenkörpern konzipierten Reaktor voraus. Um die Randgängigkeit des umzusetzenden Gasstromes zu vermeiden, ist eine flexible Abdichtung zwischen Reaktorwandung und Katalysator vorzusehen. Dafür haben sich Matten aus Al₂O₃-Isolierwolle bewährt.

Durch Tränkung der Waben mit Nickelsalzen erhält man Katalysatoren, die für das Steamreforming-Verfahren geeignet sind.

Der Steamreforming-Reaktor wird in der Regel von außen beheizt und auf die erforderliche Temperatur oberhalb von 800°C gebracht.

Die umzusetzenden Gase und Wasserdampf werden in der Regel von oben auf den Wabenkörper geleitet. Die Wabenkatalysatoren besitzen den Vorteil, daß auch ruß- oder teerhaltige Gase reformiert werden können und die Gefahr von Verstopfungen durch Rußbildung, z.B. bei verminderter Wasserdampfzufuhr, oder durch die Ablagerung von Verunreinigungen gemindert ist.

Bei Katalysatoren, die ca. 13 Gew.-% Ni enthalten, erfolgt bei Temperaturen ab 900°C und Trockengasbelastungen von ca. 6000 h⁻¹ ein nahezu vollständiger Umsatz von Methan. Ein Teil der vorhandenen Verunreinigungen wird bei den hohen Temperaturen abgebaut, sodaß auch ein Reinigungseffekt eintritt.

Die Druckverluste bei einem Wabenkatalysator mit Kanälen von 6.5 mm Kantenlänge und 1.2 mm Wandstärke liegen etwa um den Faktor 100 unter denen von Schüttgutkatalysatoren in Ringform mit den Maßen 16x16x9 mm (Außendurchmesser x Höhe x Innendurchmesser).

Die reformierten Gase sind für eine Weiterverarbeitung zu Synthesegas oder auch als Brenngase für Turbinen geeignet.

Die oberflächenreichen Waben sind unter anderem als Träger für Hydrier- bzw. Dehydrierkatalysatoren geeignet, die oberflächenarmen insbesondere für Steamreforming-Katalysatoren und Nachverbrennungskatalysatoren.

### Beispiele

### Beispiel 1

### Herstellung von Al₂O₃-Wabenkörpern (alpha/gamma-Al₂O₃)

3200 g alpha-Al₂O₃ (P30 der Fa. Alcoa) und 3600 g gamma-Al₂O₃ (Puralox SCFa-230 der Fa. Condea) werden unter Zusatz von 120 g Polyethylenoxid und 90 g Carboxymethylcellulose sowie 120 g Kohlenstoff-Fasern (Fa. Sigri) in einem Sigma-Kneter gemischt und mit 4000 g vollentsalztem Wasser in eine formfähige Konsistenz gebracht. Die Knetzeit beträgt 180 Minuten. Anschließend wird die Masse in Plastikbeuteln für mindestens 72 Stunden aufbewahrt.

Zur Entfernung von Verunreinigungen erfolgt ein Verpressen durch eine Siebplatte mit 1-mm-Bohrungen. Es schließt sich die Ausformung der Wabenkörper auf einem Schneckenextruder an. Die erhaltenen Monolithe mit den Abmessungen 50x50 mm und 500 mm Länge haben 36 quadratische Kanäle; die Wandstärken betragen 1.2 mm.

Nach dem Ausformen werden die Wabenkörper in Kartons verpackt und in einer Polyethylen-Folienhülle aufbewahrt bis die Waben einen Gewichtsverlust von 14 % aufweisen. Dann wird die Folie entfernt und die weitere Trocknung in einem Trockenschrank bei steigenden Temperaturen von 10K/12h bis zu 120°C durchgeführt. Schließlich werden die Kartons entfernt und die Monolithe drei Stunden bei 500°C geglüht.

Es folgt das Schneiden der Wabenkörper auf eine einheitliche Länge mittels Diamantsäge.

Die Porosität der erhaltenen Wabenkörper beträgt 0.40 ml/g, die BET-Oberfläche 114 m²/g.

Die Waben besitzen eine Festigkeit von 100 N/cm².

### Beispiel 2

### Herstellung von Al₂O₃-Wabenkörpern (alpha-Al₂O₃)

Die gemäß Beispiel 1 hergestellten Wabenkörper werden in einen Muffelofen gestapelt und bei Temperaturen von 1200°C drei Stunden geglüht.

Die Porosität der Waben beträgt 0.35 ml/g, die BET-Oberfläche 3.7 m²/g und die Festigkeit 250 N/cm².

### Beispiel 3

### Katalysator-Herstellung

Die gemäß Beispiel 2 hergestellten Wabenkörper werden in einen Siebkorb gestapelt, der in eine konzentrierte Nickelnitrat-Lösung getaucht wird. Nach zehn Minuten wird der Korb herausgezogen, man läßt abtropfen und trocknet bei 120°C. Nach Temperung bei 500°C wird der Tränkvorgang noch zweimal wiederholt.

### Der fertige Katalysator hat einen NiO-Gehalt von 13.8 %

Die Ermittlung des Druckverlustes mit Luft bei 20°C und Normaldruck ergab für eine Gasgeschwindigkeit von 1 m/s einen Druckverlust von 0.26 mbar/m und für 2 m/s einen Druckverlust von 0.58 mbar/m.

### Beispiel 4

### Steamreforming an Wabenkörperkatalysatoren

In einen Reaktor mit quadratischem Querschnitt wird ein gemäß Beispiel 3 hergestellter Katalysator eingebaut. Er wird von oben mit einem vorgeheizten Dampf/Gas-Gemisch beaufschlagt. Folgende Verfahrensbedingungen wurden eingestellt:
Trockengasbelastung: 6300 h⁻¹
Trockengaszusammensetzung: 10 Vol% Methan, 90 Vol% Wasserstoff
Wasserdampf/Methan: 3.0 mol/mol
Druck: 1 bar
Prüftemperatur: 650 bis 870°C
Das Austrittsgas (trocken) hat folgende Restgehalte:
   - 650°C :: 5.8 % Methan
   - 760°C :: 2.14 % Methan
   - 870°C :: 0.7 % Methan

### Beispiel 5 (Vergleichsbeispiel)

### Steamreforming an Schüttgutkatalysatoren

Alpha-Al203-Ringe mit den Maßen 16x16x9 mm (Außendurchmesser x Höhe x Innendurchmesser) werden dreimal mit einer konzentrierten Nickelnitrat-Lösung getränkt und nach jedem Tränkschritt bei 120°C getrocknet und bei 500°C calciniert. Der fertige Katalysator enthält 14,5 % NiO.

Er wird unter den in Beispiel 4 genannten Bedingungen getestet.

Das Austrittsgas (trocken) hat folgende Restgehalte:
- 650°C :: 5.56 % Methan
- 760°C :: 3.14 % Methan
- 870°C :: 1.97 % Methan

Die Druckverlustmessung ergab in Luft bei 20°C und Normaldruck bei einer Gasgeschwindigkeit von 1 m/s einen Druckverlust von 8 mbar/m und bei 2 m/s einen Druckverlust von 30 mbar/m.

## Patentansprüche

1. Wabenkörper, dadurch gekennzeichnet, daß man zu deren Herstellung ein im wesentlichen SiO₂-freies Gemisch von alpha-Aluminiumoxid, gamma-Aluminiumoxid und Kohlefasern unter Zusatz organischer Gleit- und Bindemittel einsetzt.

2. Wabenkörper nach Anspruch 1, dadurch gekennzeichnet, daß man die Mischung aus im wesentlichen SiO₂-freiem alpha-Aluminiumoxid, gamma-Aluminiumoxid und Kohlefasern unter Zusatz organischer Gleit- und Bindemittel knetet, extrudiert, trocknet und bei Temperaturen von 500 bis 1300°C calciniert.

3. Wabenkörper nach Anspruch 1, dadurch gekennzeichnet, daß diese eine spezifische Oberfläche zwischen 2 und 120 m²/g besitzen.

4. Verwendung von Wabenkörpern nach Anspruch 1, dadurch gekennzeichnet, daß man diese als Katalysatoren oder als Katalysatorträger einsetzt.

5. Verwendung von Wabenkörpern nach Anspruch 1, dadurch gekennzeichnet, daß man diese als Träger für thermisch hochbelastete Katalysatoren, im Steamreforming-Verfahren oder in der katalytischen Nachverbrennung einsetzt.

6. Verwendung von Wabenkörpern nach Anspruch 1, dadurch gekennzeichnet, daß man diese als Träger für Hydrierkatalysatoren oder Dehydrierkatalysatoren einsetzt.

## Claims

1. A honeycomb body produced using an essentially SiO₂-free mixture of alpha-aluminum oxide, gamma-aluminum oxide and carbon fibers with addition of organic lubricants and binders.

2. A honeycomb body as claimed in claim 1, wherein the mixture of essentially SiO₂-free alpha-aluminum oxide, gamma-aluminum oxide and carbon fibers is kneaded with addition of organic lubricants and binders, extruded, dried and calcined at temperatures of from 500 to 1300°C.

3. A honeycomb body as claimed in claim 1 having a specific surface area of from 2 to 120m²/g.

4. The use of a honeycomb body as claimed in claim 1 as a catalyst or catalyst support.

5. The use of a honeycomb body as claimed in claim 1 as support for a catalyst which can be subjected to high temperatures, in steam-reforming or in catalytic after-combustion.

6. The use of a honeycomb body as claimed in claim 1 as support for a hydrogenation catalyst or dehydrogenation catalyst.

## Revendications

1. Corps en nid d'abeilles, caractérisés par le fait que l'on utilise pour leur fabrication un mélange d'alpha-alumine, de gamma-alumine et de fibres de carbone essentiellement exempt de SiO₂, additionné de lubrifiants et liants organiques.

2. Corps en nid d'abeilles selon la revendication 1, caractérisés par le fait que l'on malaxe le mélange d'alpha-alumine, de gamma-alumine et de fibres de carbone essentiellement exempt de SiO₂, additionné de lubrifiants et liants organiques, on l'extrude, on le sèche et on le calcine à des températures de 500 à 1300°C.

3. Corps en nid d'abeilles selon la revendication 1, caractérisés par le fait qu'ils ont une surface spécifique de 2 à 120 m²/g.

4. Utilisation des corps en nid d'abeilles selon la revendication 1 en tant que catalyseurs ou supports de catalyseurs.

5. Utilisation des corps en nid d'abeilles selon la revendication 1 en tant que supports pour des catalyseurs soumis à de fortes contraintes thermiques, dans le procédé de reformage à la vapeur ou dans la combustion complémentaire catalytique.

6. Utilisation des corps en nid d'abeilles selon la revendication 1 en tant que supports pour des catalyseurs d'hydrogénation ou des catalyseurs de déshydrogénation.
